(19) Europäisches Patentamt
European Patent Office
Office européen des brevets

(11) Veröffentlichungsnummer: **0 297 427**
**A2**

# (12) EUROPÄISCHE PATENTANMELDUNG

(21) Anmeldenummer: **88109977.4**

(51) Int. Cl.4: **C07F 9/65 , A01N 57/24**

(22) Anmeldetag: **23.06.88**

(30) Priorität: **02.07.87 DE 3721868**

(43) Veröffentlichungstag der Anmeldung:
**04.01.89 Patentblatt 89/01**

(84) Benannte Vertragsstaaten:
**BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Gehring, Reinhold, Dr.**
**Dasnoeckel 49**
**D 5600 Wuppertal 11(DE)**
Erfinder: **Schallner, Otto Dr.**
**Noldeweg 22**
**D 4019 Monheim(DE)**
Erfinder: **Stetter, Jörg Dr.**
**Gellertweg 4**
**D 5600 Wuppertal 1(DE)**
Erfinder: **Santel, Hans-Joachim Dr.**
**Gruenstrasse 9 a**
**D 5090 Leverkusen 1(DE)**
Erfinder: **Schmidt, Robert R. Dr.**
**Im Waldwinkel 110**
**D 5060 Bergisch Gladbach 2(DE)**
Erfinder: **Strang, Harry Dr.**
**Unterdorfstrasse 6 a**
**D 4000 Düsseldorf 31(DE)**

(54) **1-Arylpyrazole.**

(57) Die Erfindung betrifft neue 1-Arylpyrazole der allgemeinen Formel (I),

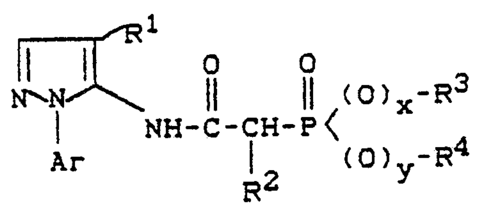

(I)

in welcher
$R^1$ für Wasserstoff oder Nitro steht,
$R^2$ für Wasserstoff oder Alkyl steht,
$R^3$ und $R^4$ unabhängig voneinander jeweils für Alkyl, Halogenalkyl oder für gegebenenfalls substituiertes Aryl stehen,
Ar für jeweils gegebenenfalls substituiertes Phenyl oder Pyridyl steht,
x für eine Zahl 0 oder 1 steht und
y für eine Zahl 0 oder 1 steht,
ein Verfahren zu ihrer Herstellung und ihre Verwendung als Herbizide.

EP 0 297 427 A2

**1-Arylpyrazole**

Die Erfindung betrifft neue 1-Arylpyrazole, ein Verfahren zu ihrer Herstellung sowie ihre Verwendung als Herbizide.

Es ist bereits bekannt, daß bestimmte 1-Arylpyrazole, wie beispielsweise das 4-Nitro-5-propionamido-1-(2,6-dichlor-4-trifluormethyl-phenyl)-pyrazol herbizide Eigenschaften besitzen (vgl. EP 154 115).

Die herbizide Wirksamkeit dieser vorbekannten Verbindungen gegenüber Problemunkräutern ist jedoch ebenso wie ihre Verträglichkeit gegenüber wichtigen Kulturpflanzen nicht in allen Anwendungsbereichen völlig zufriedenstellend.

Es wurden neue 1-Arylpyrazole der allgemeinen Formel (I),

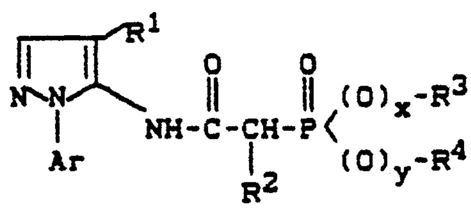

(I)

in welcher
$R^1$ für Wasserstoff oder Nitro steht,
$R^2$ für Wasserstoff oder Alkyl steht
$R^3$ und $R^4$ unabhängig voneinander jeweils für Alkyl, Halogenalkyl oder für gegebenenfalls substituiertes Aryl stehen,
Ar für jeweils gegebenenfalls substituiertes Phenyl oder Pyridyl steht,
x für eine Zahl 0 oder 1 steht und
y für eine Zahl 0 oder 1 steht,
gefunden.

Weiterhin wurde gefunden, daß man die neuen 1-Arylpyrazole der allgemeinen Formel (I),

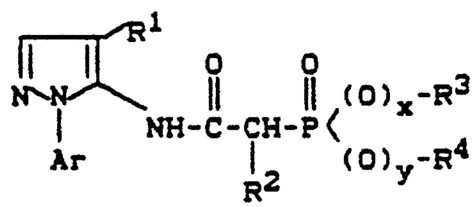

(I)

in welcher
$R^1$ für Wasserstoff oder Nitro steht,
$R^2$ für Wasserstoff oder Alkyl steht,
$R^3$ und $R^4$ unabhängig voneinander jeweils für Alkyl, Halogenalkyl oder für gegebenenfalls substituiertes Aryl stehen,
Ar für jeweils gegebenenfalls substituiertes Phenyl oder Pyridyl steht,
x für eine Zahl 0 oder 1 steht und
y für eine Zahl 0 oder 1 steht,
erhält, wenn man 5-Halogenalkanoylamido-1-aryl-pyrazole der Formel (II),

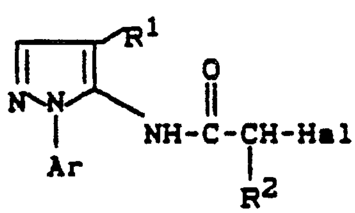

(II)

in welcher
Hal für Halogen steht und
$R^1$, $R^2$ und Ar die oben angegebene Bedeutung haben,
mit Phosphorverbindungen der Formel (III),

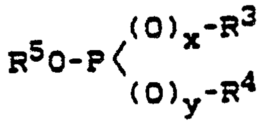 (III)

in welcher
$R^5$ für Alkyl steht und
$R^3$, $R^4$, x und y die oben angegebene Bedeutung haben,
gegebenenfalls in Gegenwart eines Verdünnungsmittels sowie gegebenenfalls in Gegenwart eines Reaktionshilfsmittels umsetzt.

Schließlich wurde gefunden, daß die neuen 1-Arylpyrazole der allgemeinen Formel (I) gute herbizide, insbesondere auch selektiv-herbizide Eigenschaften besitzen.

Überraschenderweise zeigen die erfindungsgemäßen 1-Arylpyrazole der allgemeinen Formel (I) neben einer deutlich verbesserten herbiziden Wirksamkeit gegenüber Problemun kräutern gleichzeitig eine erheblich verbesserte Kulturpflanzenselektivität im Vergleich zu den aus dem Stand der Technik bekannten 1-Arylpyrazolen, wie beispielsweise das 4-Nitro-5-propionamido-1-(2,6-dichlor-4-trifluormethylphenyl)-pyrazol, welche chemisch und wirkungsmäßig naheliegende Verbindungen sind.

Die erfindungsgemäßen 1-Arylpyrazole sind durch die Formel (I) allgemein definiert. Bevorzugt sind Verbindungen der Formel (I), bei welchen
$R^1$ für Wasserstoff oder Nitro steht,
$R^2$ für Wasserstoff oder für geradkettiges oder verzweigtes Alkyl mit 1 bis 4 Kohlenstoffatomen steht,
$R^3$ und $R^4$ unabhängig voneinander jeweils für geradkettiges oder verzweigtes Alkyl mit 1 bis 4 Kohlenstoffatomen, für geradkettiges oder verzweigtes Halogenalkyl mit 1 bis 4 Kohlenstoffatomen und 1 bis 9 gleichen oder verschiedenen Halogenatomen oder für gegebenenfalls einfach oder mehrfach gleich oder verschieden substituiertes Phenyl stehen, wobei als Phenylsubstituenten infrage kommen: Halogen, Nitro, sowie jeweils geradkettiges oder verzweigtes Alkyl oder Halogenalkyl mit jeweils 1 bis 4 Kohlenstoffatomen und im Fall des Halogenalkyl mit 1 bis 9 gleichen oder verschiedenen Halogenatomen,
Ar für jeweils gegebenenfalls einfach oder mehrfach, gleich oder verschieden substituiertes Phenyl, 2-Pyridyl, 3-Pyridyl oder 4-Pyridyl steht, wobei als Substituenten jeweils infrage kommen: Cyano, Nitro, Halogen, jeweils geradkettiges oder verzweigtes Alkyl, Alkoxy oder Alkoxycarbonyl mit jeweils 1 bis 4 Kohlenstoffatomen, jeweils geradkettiges oder verzweigtes Halogenalkyl oder Halogenalkoxy mit jeweils 1 bis 4 Kohlenstoffatomen und 1 bis 9 gleichen oder verschiedenen Halogenatomen oder ein Rest - $S(O)_z$-$R^6$, wobei
$R^6$ für Amino, sowie für jeweils geradkettiges oder verzweigtes Alkyl, Alkylamino, Dialkylamino oder Halogenalkyl mit jeweils 1 bis 4 Kohlenstoffatomen in den einzelnen Alkylteilen und im Fall des Halogenalkyl mit 1 bis 9 gleichen oder verschiedenen Halogenatomen steht,
x für eine Zahl 0 oder 1 steht,
y für eine Zahl 0 oder 1 steht und
z für eine Zahl 0, 1 oder 2 steht.

Besonders bevorzugt sind Verbindungen der Formel (I), bei welchen
$R^1$ für Wasserstoff oder Nitro steht,
$R^2$ für Wasserstoff, Methyl oder Ethyl steht,
$R^3$ und $R^4$ unabhängig voneinander jeweils für Methyl, Ethyl, n- oder i-Propyl, n-, i-, s- oder t-Butyl, Chlormethyl, Chlorethyl, Chlorpropyl, Brommethyl, Bromethyl, Brompropyl, Dichlormethyl, Trichlorethyl, Trifluorethyl, Pentafluorethyl oder Trichlormethyl oder für gegebenenfalls ein- bis dreifach gleich oder verschieden substituiertes Phenyl stehen, wobei als Phenyl-Substituenten infrage kommen: Fluor, Chlor, Brom, Nitro, Methyl, Ethyl, n-oder i-Propyl oder Trifluormethyl,
Ar für gegebenenfalls ein- bis fünffach, gleich oder verschieden substituiertes Phenyl oder für gegebenenfalls ein- bis vierfach, gleich oder verschieden substituiertes 2-Pyridyl steht, wobei als Phenyl-und Pyridyl-Substituenten jeweils infrage kommen: Cyano, Nitro, Fluor, Chlor, Brom, Iod, Methyl, Ethyl, n- oder i-Propyl, n-, i-, s- oder t-Butyl, Methoxy, Ethoxy, Methoxycarbonyl, Ethoxycarbonyl, Trifluormethyl, Trichlormethyl, Dichlorfluormethyl, Difluorchlormethyl, Chlormethyl, Dichlormethyl, Difluormethyl, Pentafluorethyl, Tetrafluorethyl, Trifluorchlorethyl, Trifluorethyl, Difluordichlorethyl, Trifluordichlorethyl, Pentachlorethyl, Trifluormethoxy, Trichlormethoxy, Dichlorfluormethoxy, Difluorchlormethoxy, Chlormethoxy, Di chlormethoxy, Difluormethoxy, Pentafluorethoxy, Tetrafluorethoxy, Trifluorchlorethoxy, Trifluorethoxy, Difluordichlorethoxy, Trifluordichlorethoxy, Pentachlorethoxy oder ein Rest $-S(O)_z-R^6$,
wobei
$R^6$ für Amino, Methylamino, Ethylamino, Dimethylamino, Diethylamino, Fluordichlormethyl, Difluormethyl, Tetrafluorethyl, Trifluorchlorethyl, Trichlormethyl, Trichlorethyl, Trifluormethyl, Methyl oder Ethyl steht,
x für eine Zahl 0 oder 1 steht,
y für eine Zahl 0 oder 1 steht und
z für eine Zahl 0, 1 oder 2 steht.

Ganz besonders bevorzugt sind Verbindungen der Formel (I), bei welchen
$R^1$ für Nitro steht,
$R^2$ für Wasserstoff steht,
$R^3$ und $R^4$ unabhängig voneinander jeweils für Methyl, Ethyl, n- oder i-Propyl oder Phenyl stehen;
Ar für gegebenenfalls ein- bis fünffach, gleich oder verschieden substituiertes Phenyl steht, wobei als Substituenten infrage kommen: Fluor, Chlor, Brom, Methyl, Ethyl, Methoxy, Ethoxy, Trifluormethyl, Tifluormethoxy, Trifluormethylthio, Trifluormethylsulfinyl oder Trifluormethylsulfonyl,
x für eine Zahl 0 oder 1 steht und
y für die Zahl 1 steht.

Verwendet man beispielsweise 5-Chloracetamido-4-nitro-1-(2,6-dichlor-4-trifluormethylphenyl)-pyrazol und Triethylphosphit als Ausgangsstoffe so läßt sich der Reaktionsablauf des erfindungsgemäßen Verfahrens durch das folgenden Formelschema darstellen:

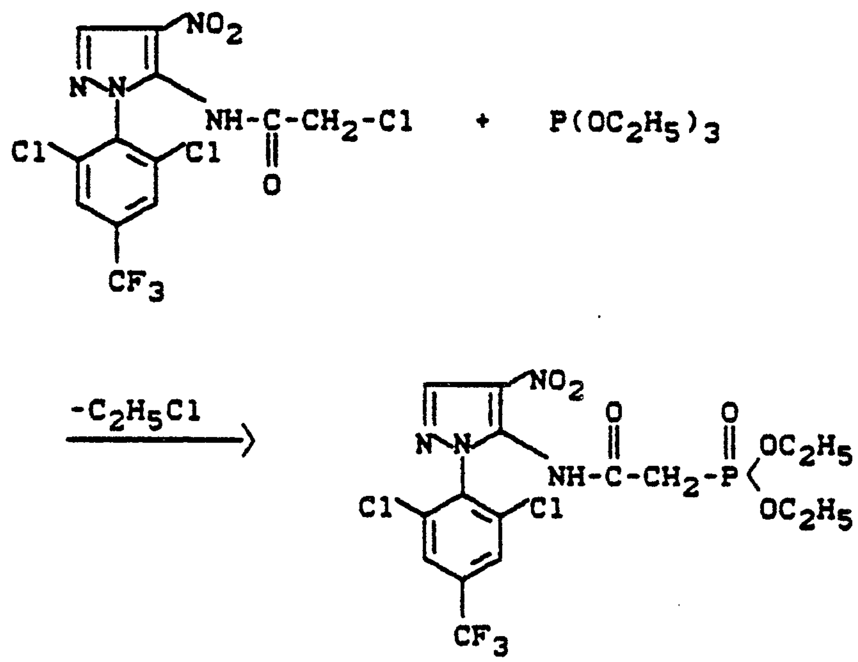


Die zur Durchführung des erfindungsgemäßen Verfahrens als Ausgangsstoffe benötigten 5-Halogenalkanoylamido-1-aryl-pyrazole sind durch die Formel (II) allgemein definiert. In dieser Formel (II) stehen $R^1$, $R^2$ und Ar eise für diejenigen Reste, die bereits im Zusammenhang mit der Beschreibung der erfindungsgemäßen Stoffe der Formel (I) als bevorzugt für diese Substituenten genannt wurden. Hal steht vorzugsweise für Chlor oder Brom.

Die 5-Halogenalkanoylamido-1-arylpyrazole der Formel (II) sind bekannt oder lassen sich in Analogie zu bekannten Verfahren herstellen (vgl. z. B. EP 154 115).

Die zur Durchführung des erfindungsgemäßen Verfahrens weiterhin als Ausgangsstoffe benötigten Phosphorverbindungen sind durch die Formel (III) allgemein definiert. In dieser Formel (III) stehen $R^3$, $R^4$, x und y vorzugsweise für diejenigen Reste und Indices, die bereits im Zusammenhang mit der Beschreibung der erfindungsgemäßen Stoffe der Formel (I) als bevorzugt für diese Substituenten und Indices genannt wurden. $R^5$ steht vorzugsweise für geradkettiges oder verzweigtes Alkyl mit 1 bis 4 Kohlenstoffatomen,

insbesondere für Methyl oder Ethyl.

Die Phosphorverbindungen der Formel (III) sind allgemein bekannte Verbindungen der organischen Chemie (vgl. z.B. Houben-Weyl "Methoden der organischen Chemie" 4. Auflage; Band 12/1 S. 208 ff sowie S. 324 ff und Band 12/2 S. 53 ff; Thieme Verlag Stuttgart 1963/1964).

Das erfindungsgemäße Verfahren kann gegebenenfalls in Gegenwart eines geeigneten Verdünnungsmittels durchgeführt werden. Als solche kommen insbesondere die üblichen inerten organischen Lösungsmittel infrage. Vorzugsweise arbeitet man jedoch ohne Zusatz von Lösungsmitteln mit einem entsprechenden Überschuß an Phosphorverbindung der Formel (III), welche gleichzeitig als Verdünnungsmittel eingesetzt wird.

Das erfindungsgemäße Verfahren kann gegebenenfalls in Gegenwart eines geeigneten Reaktionshilfsmittels durchgeführt werden. Als solche verwendet man vorzugsweise Alkylhalogenide, deren Alkylrest dem Rest $R^5$ entspricht, welcher bei der erfindungsgemäßen Umsetzung als Verbindung der Formel (IV),

$R^5$-Hal (IV)

in welcher

$R^5$ und Hal die oben angegebene Bedeutung haben,

freigesetzt wird.

Die Reaktionstemperaturen können bei der Durchführung des erfindungsgemäßen Verfahrens in einem größeren Bereich variiert werden. Im allgemeinen arbeitet man bei Temperaturen zwischen 20 °C und 200 °C, vorzugsweise bei Temperaturen zwischen 50 °C und 150 °C.

Zur Durchführung des erfindungsgemäßen Verfahrens setzt man pro Mol an 5-Halogenalkanoylamido-1-aryl-pyrazol der Formel (II) im allgemeinen 1.0 bis 10.0 Mol, vorzugsweise 1.0 bis 3.0 Mol an Phosphorverbindung der Formel (III) und gegebenenfalls 0.01 bis 1.0 Mol, vorzugsweise 0.1 bis 0.2 Mol an Reaktionshilfsmittel ein. Die Reaktionsdurchführung, Aufarbeitung und Isolierung der Reaktionsprodukte erfolgt nach allgemein üblichen Methoden (vgl. Houben-Weyl "Methoden der organischen Chemie" Band 12/1 S. 433 ff; 4. Auflage, Thieme Verlag Stuttgart 1963 sowie die Herstellungsbeispiele).

Die erfindungsgemäßen Wirkstoffe können als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden:

<u>Dikotyle Unkräuter der Gattungen:</u>

Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

<u>Dikotyle Kulturen der Gattungen:</u>

Gossypium, Glycine, Beta, Daucus, Phaseolus, Pisum, Solanum, Limum, Ipomoea, Vicia, Nicotiana, Lycopersicon, Arachis, Brassica, Lactuca, Cucumis, Cucurbita.

<u>Monokotyle Unkräuter der Gattungen:</u>

Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen:

Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie- und Gleisanlagen und auf Wegen und Plätzen mit und ohne Baumbewuchs. Ebenso können die Verbindungen zur Unkrautbekämpfung in Dauerkulturen, z.B. Forst, Ziergehölz-, Obst-, Wein-, Citrus-, Nuß-, Bananen-, Kaffee-, Tee-, Gummi-, Ölpalm-, Kakao-, Beerenfrucht- und Hopfenanlagen und zur selektiven Unkrautbekämpfung in einjährigen Kulturen eingesetzt werden.

Dabei lassen sich die erfindungsgemäßen Wirkstoffe mit bsonders gutem Erfolg zur selektiven Bekämpfung dikotyler Unkräuter in mono- und dikotylen Kulturen wie beispielsweise Baumwolle, Weizen oder Reis einsetzen. In entsprechenden Aufwandmengen zeigen die erfindungsgemäßen Wirkstoffe darüberhinaus auch wachstumsregulatorische Wirkungen und lassen sich beispielsweise als Baumwolldefoliantien verwenden.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder - schaumerzeugenden Mitteln.

Im Falle der Benutzung von Wasser als Streckmittel können z.B. auch organische Lösungsmittel als Hilfslösungsmitel verwendet werden. Als flüssisge Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
z.B. Ammoniumsalze und natürliche Gesteinsmehle, wie Kaoline, Tonerden, Talkum, Kreide, Quarz, Attapulgit,
Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims Sepiolith, Dolomit sowie synthetische Granulate aus anorganischen und organischen Mehlen sowie Granulate aus organischem Material wie Sägemehl, Kokosnußschlaen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch in Mischung mit bekannten Herbiziden zur Unkrautbekämpfung Verwendung finden, wobei Fertigformulierungen oder Tankmischungen möglich sind.

Für die Mischungen kommen bekannte Herbizide wie z.B. 1-Amino-6-ethylthio-3-(2,2-dimethylpropyl)-1,3,5-triazin-2,4(1H,3H)-dion oder N-(2-Benzthiazolyl)-N,N′-dimethylharnstoff zur Unkrautbekämpfung in Getreide; 4-Amino-3-methyl-6-phenyl-1,2,4-triazin-5(4H)-on zur Unkrautbekämpfung in Zuckerrüben und 4-Amino-6-(1,1-dimethylethyl)-3-methylthio-1,2,4-triazin-5(4H)-on zur Unkrautbekämpfung in Sojabohnen, infrage. Auch Mischungen mit 2,4-Dichlorphenoxyessigsäure;
2,4-Dichlorphenoxypropionsäure;
4-(2,4-Dichlorphenoxy)-buttersäure;
(2-Methyl-4-chlorphenoxy)-essigsäure;
(4-Chlor-2-methylphenoxy)-propionsäure;
3,5,6-Trichlor-2-pyridyloxyessigsäure;
2-{4-[(6-Chlor-2-benzoxazolyl)-oxy]-phenoxy}-propansäure, deren Methyl- oder deren Ethylester;
2-[4-(3,5-Dichlorpyrid-2-yloxy)-phenoxy]-propionsäure-(trimethylsilylmethylester);
3,6-Dichlor-2-pyridincarbonsäure;
1-(3-Trifluormethyl-phenyl)-4-methylamino-5-chlor-6-pyridazon;
Chloressigsäure-N-(methoxymethyl)-2,6-diethylanilid;
N-(Butoxymethyl)-2-chlor-N-(2,6-diethylphenyl)-acetamid;
2-Chlor-N-(2,6-dimethylphenyl)-N-[(1H)-pyrazol-1-yl-methyl]-acetamid;
2-Ethyl-6-methyl-N-(1-methyl-2-methoxyethyl)-chloracetanilid;
α-Chlor-2′,6′-diethyl-N-(2-propoxyethyl)-acetanilid;
2-Chlor-N-isopropylacetanilid;
4-(Di-n-propylamino)-3,5-dinitrobenzolsulfonamid;
N-(1-Ethylpropyl)-3,4-dimethyl-2,6-dinitroanilin;
2,6-Dinitro-4-trifluormethyl-N,N-dipropylanilin;
Methyl-5-(2,4-dichlorphenoxy)-2-nitrobenzoat;
N,N-Dimethyl-N′-(3-chlor-4-methylphenyl)-harnstoff;
N,N-Dimethyl-N′(3-trifluormethylphenyl)-harnstoff;
N,N-Dimethyl-N′-(4-isopropylphenyl)-harnstoff;
Methyl-2-[4,5-dihydro-4-methyl-4-(1-methylethyl)-5-oxo-1H-imidazol-2-yl]-4(5)-methylbenzoat;
3,5-Dibrom-4-hydroxy-benzonitril;
3,5-Diiod-4-hydroxybenzonitril;
N-Methyl-2-(1,3-benzthiazol-2-yloxy)-acetanilid;
2-[[[[(4,6-Dimethoxypyrimidin-2-yl)-amino]-carbonyl]-amino]-sulfonyl]-methyl]-benzoesäuremethylester;
Ethyl-2-{[(4-chlor-6-methoxy-2-pyrimidinyl)-aminocarbonyl]-aminosulfonyl}-benzoat;
2-Chlor-N-{[(4-methoxy-6-methyl-1,3,5-triazin-2-yl)-amino]-carbonyl}-benzolsulfonamid;
2-{[[((4-Methoxy-6-methyl-1,3,5-triazin-2-yl)-amino)-carbonyl]-amino]-sulfonyl}-benzoesäure oder deren Methylester;
Methyl-2-{[(4,6-dimethyl-2-pyrimidinyl)-aminocarbonyl]-aminosulfonyl}-benzoat;
3-[[[[(4-Methoxy-6-methyl-1,3,5-triazin-2-yl)-amino]-carbonyl]-amino]-sulfonyl]-thiophen-2-carbonsäuremethylester;
N,S-Diethyl-N-cyclohexyl-thiolcarbamat;
N,N-Di-n-propyl-thiocarbamidsäure-S-ethylester;
S-Ethyl-N,N-hexamethylen-thiolcarbamat;
S-[(4-Chlorphenyl)-methyl]-N,N-diethyl-thiocarbamat;
N,N-Diisopropyl-S-(2,3,3-trichlorallyl)-thiolcarbamat;
2-Chlor-4-ethylamino-6-isopropylamino-1,3,5-triazin;
2-Chlor-4-ethylamino-6-(3-cyanopropylamino)-1,3,5-triazin;
2,4-Bis-[N-ethylamino]-6-methylthio-1,3,5-triazin;
4-Ethylamino-2-t-butylamino-6-methylthio-s-triazin;
4-Amino-6-t-butyl-3-ethylthio-1,2,4-triazin-5(4H)-on;
3-Isopropyl-2,1,3-benzothiadiazin-4-on-2,2-dioxid;
exo-1-Methyl-4-(1-methylethyl)-2-(2-methylphenyl-methoxy)-7-oxabicyclo-(2,2,1)-heptan oder 1-Methyl-3-phenyl-5-(3-trifluormethylphenyl)-4-pyridon sind möglich.
Einige Mischungen zeigen überraschenderweise auch synergistische Wirkung.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäßen Wirkstoffe können sowohl vor als auch nach dem Auflaufen der Pflanzen appliziert werden.

Sie können auch vor der Saat in den Boden eingearbeitet werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,01 und 10 kg Wirkstoff pro Hektar Bodenfläche, vorzugsweise zwischen 0,05 und 5 kg pro ha.

Die Herstellung und die Verwendung der erfindungsgemäßen Wirkstoffe geht aus den nachfolgenden Beispielen hervor.

Herstellungsbeispiele

Beispiel 1

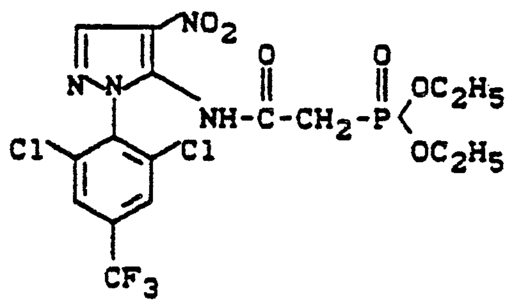

8,2 g (0,02 Mol) 5-Chloracetamido-1-(2,6-dichlor-4-trifluormethylphenyl)-4-nitro-pyrazol (vgl. EP 154 115) und 6,8 ml (0,04 Mol) Triethylphosphit werden langsam auf 120 °C erhitzt. Ab ca. 100 °C findet eine heftige Gasentwicklung statt. Man rührt 2 Stunden bei 120 °C, destilliert dann überschüssiges Triethylphosphit im Vakuum ab und reinigt den Rückstand säulenchromatographisch (Kieselgel; Dichlormethan/Aceton 9 : 1).

Man erhält 4,6 g (44 % der Theorie) an 5-(0,0-Diethylphosphonylacetamido)-1-(2,6-dichlor-4-trifluormethylphenyl)-4-nitro-pyrazol vom Schmelzpunkt 158 °C -161 °C.

Beispiel 2

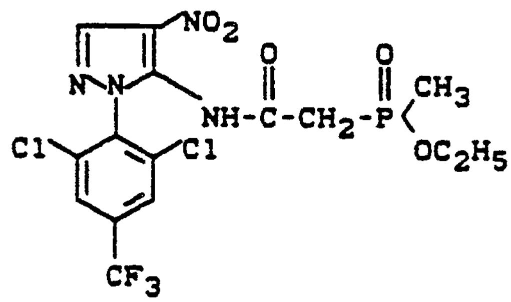

8,2 g (0,02 Mol) 5-Chloracetamido-1-(2,6-dichlor-4-trifluormethylphenyl)-4-nitro-pyrazol und 6 ml (0,04 Mol) Methylphosphonigsäurediethylester werden langsam auf 100 °C erhitzt. Ab ca 90 °C setzt eine Gasentwicklung ein. Man rührt 10 Minuten bei 100 °C, destilliert dann überschüssigen Methylphosphonigsäureester im Vakuum ab und reinigt den Rückstand säulenchromatographisch (Kieselgel; Dichlormethan / Aceton 9 : 1).

Man erhält 3,3 g (34 % der Theorie) an 5- (0-Ethylmethylphosphinoylacetamido)-1-(2,6-dichlor-4-trifluormethylphenyl)-4-nitro-pyrazol vom Schmelzpunkt 128 °C (Zers.).

In entsprechender Weise und gemäß den allgemeinen Angaben zur Herstellung erhält man die

folgenden 1-Arylpyrazole der allgemeinen Formel (I):

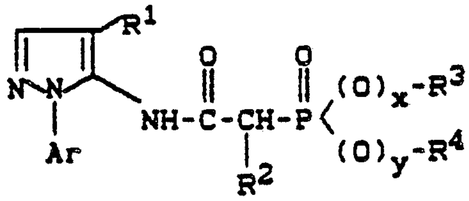

(I)

| Bsp. Nr. | $R^1$ | $R^2$ | 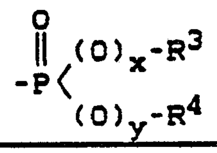 | Ar | Schmelzpunkt/° C |
|---|---|---|---|---|---|
| 3 | $NO_2$ | H | 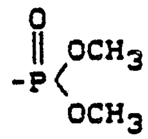 | 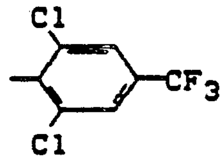 | 208 |
| 4 | $NO_2$ | H | 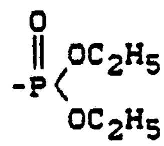 | 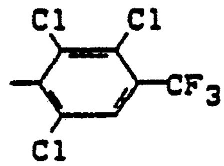 | 127 |
| 5 | $NO_2$ | H | 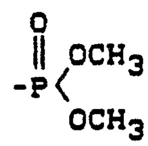 | 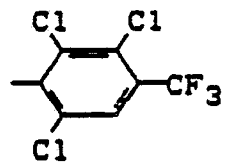 | 125 |
| 6 | $NO_2$ | H | 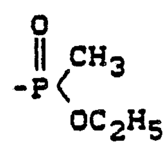 | 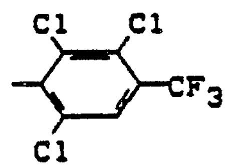 | 167 |

Anwendungsbeispiele

In den folgenden Anwendungsbeispielen wurden die nachstehend aufgeführten Verbindungen als Vergleichsubstanzen eingesetzt:

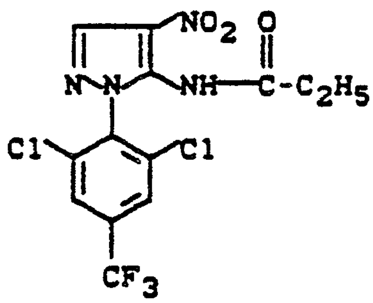

(A)

5-Propionamido-4-nitro-1-(2,6-dichlor-4-trifluormethylphenyl)-pyrazol

(bekannt aus EP 154 115)

Beispiel A

Pre-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)
100 % = totale Vernichtung

Eine deutliche Überlegenheit in der Wirksamkeit ebenso wie in der Nutzpflanzenselektivität gegenüber dem Stand der Technik zeigen in diesem Test z.B. die Verbindungen gemäß folgender Herstellungsbeispiele: 1, 2, 3, 5 und 6.

**Ansprüche**

1. 1-Arylpyrazole der allgemeinen Formel (I),

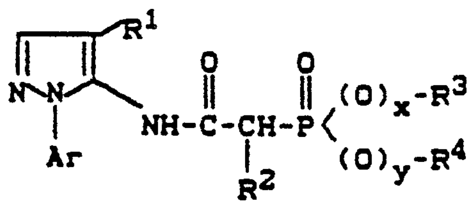

(I)

in welcher
$R^1$ für Wasserstoff oder Nitro steht,
$R^2$ für Wasserstoff oder Alkyl steht,
$R^3$ und $R^4$ unabhängig voneinander jeweils für Alkyl, Halogenalkyl oder für gegebenenfalls substituiertes Aryl stehen,
Ar für jeweils gegebenenfalls substiutiertes Phenyl oder Pyridyl steht,
x für eine Zahl 0 oder 1 steht und
y für eine Zahl 0 oder 1 steht.

2. 1-Arylpyrazole der Formel (I) gemäß Anspruch 1, in welcher
$R^1$ für Wasserstoff oder Nitro steht,
$R^2$ für Wasserstoff oder für geradkettiges oder verzweigtes Alkyl mit 1 bis 4 Kohlenstoffatomen steht,
$R^3$ und $R^4$ unabhängig voneinander jeweils für geradkettiges oder verzweigtes Alkyl mit 1 bis 4 Kohlenstoffatomen, für geradkettiges oder verzweigtes Halogenalkyl mit 1 bis 4 Kohlenstoffatomen und 1 bis 9 gleichen oder verschiedenen Halogenatomen oder für gegebenenfalls einfach oder mehrfach gleich oder verschieden substituiertes Phenyl stehen, wobei als Phenylsubstituenten infrage kommen: Halogen, Nitro, sowie jeweils geradkettiges oder verzweigtes Alkyl oder Halogenalkyl mit jeweils 1 bis 4 Kohlenstoffatomen und im Fall des Halogenalkyl mit 1 bis 9 gleichen oder verschiedenen Halogenatomen,
Ar für jeweils gegebenenfalls einfach oder mehrfach, gleich oder verschieden substituiertes Phenyl, 2-Pyridyl, 3-Pyridyl oder 4-Pyridyl steht, wobei als Substituenten jeweils infrage kommen: Cyano, Nitro, Halogen, jeweils geradkettiges oder verzweigtes Alkyl, Alkoxy oder Alkoxycarbonyl mit jeweils 1 bis 4 Kohlenstoffatomen, jeweils geradkettiges oder verzweigtes Halogenalkyl oder Halogenalkoxy mit jeweils 1 bis 4 Kohlenstoffatomen und 1 bis 9 gleichen oder verschiedenen Halogenatomen oder ein Rest $-S(O)_z-R^6$, wobei
$R^6$ für Amino, sowie für jeweils geradkettiges oder verzweigtes Alkyl, Alkylamino, Dialkylamino oder Halogenalkyl mit jeweils 1 bis 4 Kohlenstoffatomen in den einzelnen Alkylteilen und im Fall des Halogenalkyl mit 1 bis 9 gleichen oder verschiedenen Halogenatomen steht,
x für eine Zahl 0 oder 1 steht,
y für eine Zahl 0 oder 1 steht und
z für eine Zahl 0, 1 oder 2 steht.

3. 1-Arylpyrazole der Formel (I) gemäß Anspruch 1, in welcher
$R^1$ für Wasserstoff oder Nitro steht,
$R^2$ für Wasserstoff, Methyl oder Ethyl steht,
$R^3$ und $R^4$ unabhängig voneinander jeweils für Methyl, Ethyl, n- oder i-Propyl, n-, i-, s- oder t-Butyl, Chlormethyl, Chlorethyl, Chlorpropyl, Brommethyl, Bromethyl, Brompropyl, Dichlormethyl, Trichlorethyl, Trifluorethyl, Pentafluorethyl oder Trichlormethyl oder für gegebenenfalls ein- bis dreifach gleich oder verschieden substituiertes Phenyl stehen, wobei als Phenyl-Substituenten infrage kommen: Fluor, Chlor, Brom, Nitro, Methyl, Ethyl, n-oder i-Propyl oder Trifluormethyl,
Ar für gegebenenfalls ein- bis fünffach, gleich oder verschieden substituiertes Phenyl oder für gegebenenfalls ein- bis vierfach, gleich oder verschieden substituiertes 2-Pyridyl steht, wobei als Phenyl-und Pyridyl-Substituenten jeweils infrage kommen: Cyano, Nitro, Fluor, Chlor, Brom, Iod, Methyl, Ethyl; n-oder i-Propyl, n-, i-, s- oder t-Butyl, Methoxy, Ethoxy, Methoxycarbonyl, Ethoxycarbonyl, Trifluormethyl, Trichlormethyl, Dichlorfluormethyl, Difluorchlormethyl, Chlormethyl, Dichlormethyl, Difluormethyl, Pentafluorethyl, Tetrafluorethyl, Trifluorchlorethyl, Trifluorethyl, Difluordichlorethyl, Trifluordichlorethyl, Pentachlorethyl, Trifluormethoxy, Trichlormethoxy, Dichlor fluormethoxy, Difluorchlormethoxy, Chlormethoxy, Dichlormethoxy, Difluormethoxy, Pentafluorethoxy, Tetrafluorethoxy, Trifluorchlorethoxy, Trifluorethoxy, Difluordichlorethoxy, Trifluordichlorethoxy, Pentachlorethoxy oder ein Rest $-S(O)_z-R^6$, wobei
$R^6$ für Amino, Methylamino, Ethylamino, Dimethylamino, Diethylamino, Fluordichlormethyl, Difluormethyl, Tetrafluorethyl, Trifluorchlorethyl, Trichlormethyl, Trichlorethyl, Trifluormethyl, Methyl oder Ethyl steht,
x für eine Zahl 0 oder 1 steht,
y für eine Zahl 0 oder 1 steht und
z für eine Zahl 0, 1 oder 2 steht.

4. 1-Arylpyrazole der Formel (I) gemäß Anspruch 1, in welcher
$R^1$ für Nitro steht,
$R^2$ für Wasserstoff steht,
$R^3$ und $R^4$ unabhängig voneinander jeweils für Methyl, Ethyl, n- oder i-Propyl oder Phenyl stehen;
Ar für gegebenenfalls ein- bis fünffach, gleich oder verschieden substituiertes Phenyl steht, wobei als Substituenten infrage kommen: Fluor, Chlor, Brom, Methyl, Ethyl, Methoxy, Ethoxy, Trifluormethyl, Tifluormethoxy, Trifluormethylthio, Trifluormethylsulfinyl oder Trifluormethylsulfonyl, x für eine Zahl 0 oder 1 steht und y für die Zahl 1 steht.

5. Verfahren zur Herstellung von 1-Arylpyrazolen der Formel (I),

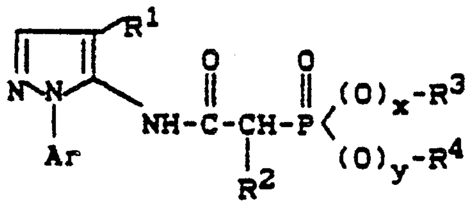

(I)

in welcher

$R^1$ für Wasserstoff oder Nitro steht,

$R^2$ für Wasserstoff oder Alkyl steht,

$R^3$ und $R^4$ unabhängig voneinander jeweils für Alkyl, Halogenalkyl oder für gegebenenfalls substituiertes Aryl stehen,

Ar für jeweils gegebenenfalls substituiertes Phenyl oder Pyridyl steht,

x für eine Zahl 0 oder 1 steht und

y für eine Zahl 0 oder 1 steht,

dadurch gekennzeichnet, daß man 5-Halogenalkanoylamido-1-aryl-pyrazole der Formel (II),

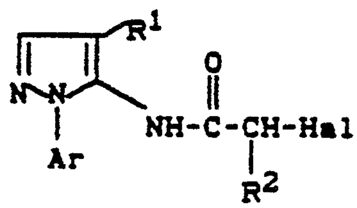

(II)

in welcher

Hal für Halogen steht und

$R^1$, $R^2$ und Ar die oben angegebene Bedeutung haben,

mit Phosphorverbindungen der Formel (III),

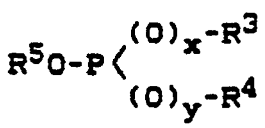

(III)

in welcher

$R^5$ für Alkyl steht und

$R^3$, $R^4$, x und y die oben angegebene Bedeutung haben,

gegebenenfalls in Gegenwart eines Verdünnungsmittels sowie gegebenenfalls in Gegenwart eines Reaktionshilfsmittels umsetzt.

6. Herbizide Mittel, gekennzeichnet durch einen Gehalt an mindestens einem 1-Arylpyrazol der Formel (I) gemäß den Ansprüchen 1 und 5.

7. Verfahren zur Bekämpfung von Unkräutern, dadurch gekennzeichnet, daß man 1-Arylpyrazole der Formel (I) gemäß den Ansprüchen 1 und 5 auf die Unkräuter und/oder ihren Lebensraum einwirken läßt.

8. Verwendung von 1-Arylpyrazolen der Formel (I) gemäß den Ansprüchen 1 und 5 zur Bekämpfung von Unkräutern.

9. Verfahren zur Herstellung von herbiziden Mitteln, dadurch gekennzeichnet, daß man 1-Arylpyrazole der Formel (I) gemäß den Ansprüchen 1 und 5 mit Streckmitteln und/oder oberflächenaktiven Substanzen ver mischt.